# EUROPÄISCHE PATENTSCHRIFT

(11) **EP 2 886 494 B1**
(45) Veröffentlichungstag und Bekanntmachung des Hinweises auf die Patenterteilung: **29.03.2017**
(21) Anmeldenummer: 13199375.0
(22) Anmeldetag: 23.12.2013
(51) Int. Cl.: B65G 19/02, B65G 47/61, B65G 9/00

(54) **Fördervorrichtung zur Beförderung von hängenden Gegenständen**
Conveyor device for conveying suspended objects
Dispositif de transport pour le transport d'objets suspendus

(43) Veröffentlichungstag der Anmeldung: 24.06.2015
(73) Patentinhaber: SDI Group Germany Material Handling Solutions GmbH, 33609 Bielefeld (DE)
(72) Erfinder: OTTO Thomas, 33659 Bielefeld (DE)
(74) Vertreter: Specht, Peter

(56) Entgegenhaltungen:
- EP-A1- 1 258 439
- EP-A1- 1 531 133
- EP-A1- 1 690 811

## Beschreibung

Die vorliegende Erfindung betrifft eine Fördervorrichtung zur Beförderung von hängenden Gegenständen gemäß dem Oberbegriff des Anspruchs 1.

Gattungsgemäße Fördervorrichtungen, die zur Beförderung von hängenden Gegenständen dienen und auch aus Schleppkreisförderer oder Power-and-Free-Förderer bezeichnet werden, bestehen im Wesentlichen aus einem Schienenprofil, in dem in einer oberen Laufbahn eine Förderkette geführt wird, und einer unterhalb dieser oberen Laufbahn angeordneten zweiten Laufbahn, in der Halteadapter geführt sind, die von der Förderkette in Förderrichtung mitgenommen werden.

Solch eine Fördervorrichtung mit den Merkmalen des Oberbegriffes des Anspruchs 1 ist z.B. aus der DE 10 2013 100 132 A1 bekannt.

Um einen zu befördernden Gegenstand in einer solchen Förderrichtung anzuhalten, wird nicht die Förderkette angehalten, sondern der Halteadapter beispielsweise mithilfe einer Stoppeinrichtung angehalten und dabei von der Förderkette entkoppelt, wobei die Förderkette sich weiterbewegt.

Um aus einer solchen Fördervorrichtung einzelne an den Halteadaptern hängende Gegenstände auszusortieren, müssen sämtliche Halteadaptern mit daran hängenden Gegenstände in einem Sortierförderer überführt werden, in dem die Halteadapter und damit die zu befördernden Gegenstände in definierten Abständen voneinander eingekoppelt sind. In dem Sortierförderer werden dann die auszusortierenden Gegenstände identifiziert und aus dem Sortierförderer heraus weiter zu einer Packstelle oder dergleichen befördert. Die verbleibenden Gegenstände werden anschließend an den Halteadaptern hängend wieder zurück in den als Speicherkreisel benutzten Schleppkreisförderer zurück befördert, was die Aussortierung gewünschter Gegenstände sehr zeitaufwändig gestaltet. Insbesondere müssen die auszusortierenden Gegenstände unter Umständen lange Zeit durch den als Speicherkreisel benutzten Schleppkreisförderer verfahren werden, um an die Stelle der Fördervorrichtung zu gelangen, an der der Gegenstand in einen Sortierförderer überführt werden kann.

Aus der EP 1 531 133 A1 ist eine Fördervorrichtung bekannt, bei der Bügel auf einer Führungsschiene mithilfe einer Schleppkette mitgenommen werden. Die Führungsschiene weist zur Aussortierung einzelner Bügel ein in Mitnahmerichtung verschiebbares Weichenzungenelement auf, das in einer ersten Position die Lücke zwischen einem ersten Anschnitt der Führungsschiene und einem zweiten Abschnitt der Führungsschiene verschließt und in einer zweiten Position eine Lücke zwischen den Führungsschienenabschnitten belässt, durch die ein Bügel nach unten auf eine weitere Führungsschiene abrutschen kann.

Aus der EP 1 258 439 A1 ist eine Fördervorrichtung bekannt, bei der Bügel in eine Transportrolle eingesteckt werden, die auf einer Führungsschiene mithilfe eines kammartigen Förderorgans, das durch eine Gliederkette angetrieben wird, mitgenommen werden.

Aufgabe der vorliegenden Erfindung ist es, eine gattungsgemäße Fördervorrichtung derart weiterzuentwickeln, dass die Verweildauer in der Fördervorrichtung verringert ist und damit die Aussortierung einzelner beförderter Gegenstände deutlich schneller erfolgen kann.

Diese Aufgabe wird durch eine Fördervorrichtung zur Beförderung von hängenden Gegenständen mit den Merkmalen des Anspruchs 1 gelöst.

Die Fördervorrichtung zur Beförderung von hängenden Gegenständen weist ein erstes Schienenprofil mit einer ersten oberen Laufbahn und einer unterhalb der ersten Laufbahn angeordneten zweiten Laufbahn auf. In der ersten Laufbahn des Schienenprofils ist eine Förderkette zur Beförderung von Halteadaptern in einer Förderrichtung kontinuierlich bewegbar.

Die Halteadapter sind zur Halterung jeweils eines zu befördernden Gegenstandes vorgesehen und weisen jeweils ein Kopfteil auf, das in der zweiten Laufbahn des Schienenprofils rollbar gelagert ist, wobei die Halteadapter bei sich bewegender Förderkette von dieser koppel- und entkoppelbar sind.

Die erfindungsgemäße Fördervorrichtung zeichnet sich dadurch aus, dass das erste Schienenprofil einen Sortierabschnitt mit einer Vereinzelungseinrichtung mit einer in Förderrichtung nachfolgenden Weiche aufweist, wobei die zweite Laufbahn im Bereich des Sortierabschnittes als Gefällestrecke in Förderrichtung ausgebildet ist, bei der der Abstand zwischen der ersten Laufbahn und der zweiten Laufbahn sich auf ein Maß vergrößert, bei dem die Halteadapter und die Förderkette von einander entkoppelt sind und die Vereinzelungseinrichtung und die Weiche in einem Bereich des Sortierabschnittes angeordnet sind, bei dem die Halteadapter von der Förderkette entkoppelt sind.

Mit einer solchen Fördervorrichtung ist in eine als Schleppkreisförderer ausgebildete Fördervorrichtung ein Sortierabschnitt integrierbar, was dadurch ermöglicht ist, dass die Halteadapter im von der Förderkette entkoppelten Zustand den Sortierabschnitt durchlaufen ,ohne den Kreislauf der übrigen in der Fördervorrichtung geführten Halteadapter und damit der an diesen beförderten Gegenstände zu behindern, insbesondere zu verlangsamen.

Das Aussortieren einzelner an den Halteadaptern hängender Gegenstände ist dadurch in wesentlich kürzerer Zeit ermöglicht als bei herkömmlichen Fördervorrichtungen, bei denen die auszusortierenden Gegenstände aus einem als Pufferspeicher dienenden Schleppkreisförderer zunächst in einen Sortierkreislauf überführt werden müssen, in dem die Gegenstände beziehungsweise Halteadapter in definierten Abständen voneinander in die Förderkette eingeklinkt sind, um die beispielsweise an einem Halteadapter angebrachte Information bezüglich des daran transportierten Gegenstandes auslesen, die nachfolgende Weiche entsprechend umlegen und so die gewünschten Gegenstände aussortieren oder in den Pufferkreislauf zurückzuführen zu können.

Vorteilhafte Ausführungsvarianten der Erfindung sind Gegenstand der Unteransprüche.

Gemäß einer vorteilhaften Ausführungsvariante der Erfindung ist das erste Schienenprofil als geschlossenes Kreislaufprofil ausgebildet, wobei in Förderrichtung hinter der Weiche ein zweites Schienenprofil sowie ein drittes Schienenprofil anschließt, wobei das zweite Schienenprofil mit einer Laufbahn zur Aufnahme und Weiterförderung der Halteadapter an die zweite Laufbahn des ersten Schienenprofils anschließt und in einen Wiedereingliederungsabschnitt des ersten Schienenprofils mündet und wobei das dritte Schienenprofil an die zweite Laufbahn des ersten Schienenprofils zur Weiterbeförderung der Halteadapter zu einer weiteren Fördervorrichtung anschließt.

Durch das Vorsehen einer solchen zweiten Laufbahn zur Rückführung der Halteadapter in die das erste Schienenprofil ist eine zuverlässige und Rückstau vermeidende Rückführung der Halteadapter in das bevorzugt in einer Ebene verlaufendes erste Schienenprofil ermöglicht.

Gemäß einer weiteren bevorzugten Ausführungsvariante der Erfindung ist die zweite Laufbahn im Bereich des Wiedereingliederungsabschnitts als Steigungsstrecke in Förderrichtung ausgebildet, wobei in dem Wiedereingliederungsabschnitt der Abstand zwischen der ersten Laufbahn und der zweiten Laufbahn des ersten Schienenprofils sich von einem Maß, bei dem die Halteadapter und die Förderkette nicht miteinander koppelbar sind, auf ein Maß verkleinert, bei dem die Halteadapter die Förderkette miteinander koppelbar sind.

Zur Beförderung der Halteadapter in dem zweiten Schienenprofil ist nach einer weiteren Ausführungsvariante der Erfindung parallel zum zweiten Schienenprofil eine Fördereinrichtung vorgesehen, die insbesondere als Kettenantrieb mit in den Kopfteil der Halteadapter eingreifenden Fingern zur Weiterbeförderung der Halteadapter in Förderrichtung vorgesehen ist.

Diese Finger der Fördereinrichtung sind dabei bevorzugt elastisch ausgebildet. Dadurch ist ermöglicht, dass auch bei einem zufälligen aneinander stoßen eines Fingers an einen Seitenbereich des Halteadapters der Finger elastisch nach links oder rechts umgebogen wird um dabei je nach Ausweichrichtung entweder den jeweiligen Halteadapter hintergreift und weiterbefördert oder in Förderrichtung vor den Halteadapter ausweicht, so dass der Halteadapter vom nächsten Finger der Fördereinrichtung mitgenommen wird.

Nach einer weiteren vorteilhaften Ausgestaltung der Erfindung schließt in Förderrichtung vor der Stoppeinrichtung ein Geschwindigkeitssteuerabschnitt an, mit einer Erkennungseinrichtung zur Erkennung einer Anzahl von in dem Geschwindigkeitssteuerabschnitt vorhandenen Adapter, wobei bei Unterschreitung einer vorgegebenen Anzahl an Adaptern von der Erkennungseinrichtung ein Steuersignal zur Erhöhung der Fördergeschwindigkeit der Förderkette an eine Antriebseinheit der Förderkette ausgegeben wird. Dadurch ist eine kapazitätsgesteuerte Geschwindigkeitsregelung der Fördervorrichtung ermöglicht.

Nachfolgend werden bevorzugte Ausführungsvarianten der Erfindung anhand der beiliegenden Zeichnungen näher erläutert. Es zeigen:
- Figur 1: eine perspektivische Ansicht auf eine Ausführungsvariante einer erfindungsgemäßen Fördervorrichtung,
- Figur 2: eine Draufsicht auf die Fördervorrichtung als Figur 1,
- Figur 3: eine Ansicht von unten auf die Fördervorrichtung aus Figur 1,

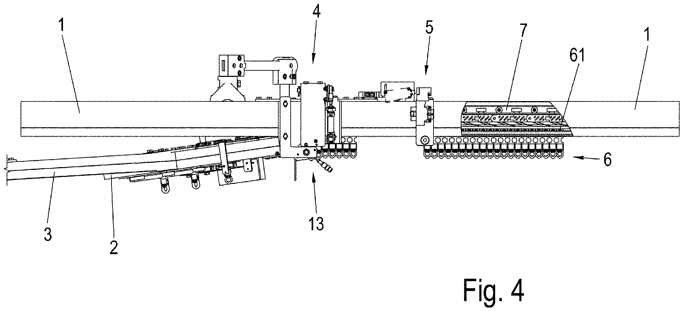

- Figur 4: eine Seitenansicht auf die Fördervorrichtung aus Figur 1 mit Darstellung des Sortierabschnittes,
- Figur 5: eine Seitenansicht auf die Fördervorrichtung aus Figur 1 mit Ansicht des Wiedereingliederungsabschnittes,

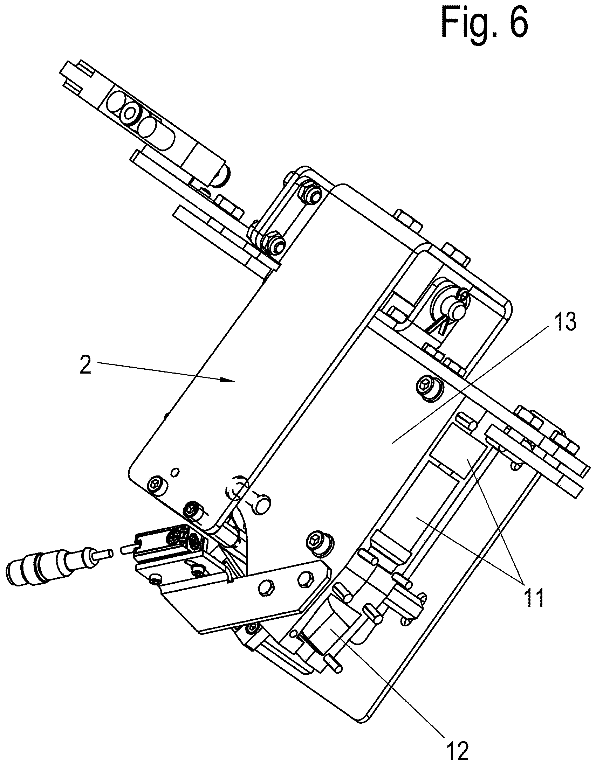

- Figur 6: eine perspektivische Ansicht des Schienenprofils im Bereich der Vereinzelungseinrichtung und
- Figur 7: eine Seitenansicht des in Figur 6 gezeigten Abschnitts des Schienenprofils mit Darstellung der Gefällestrecke.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Fördervorrichtung, Schienenprofil, Laufbahn, Förderkette, Halteadapter und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

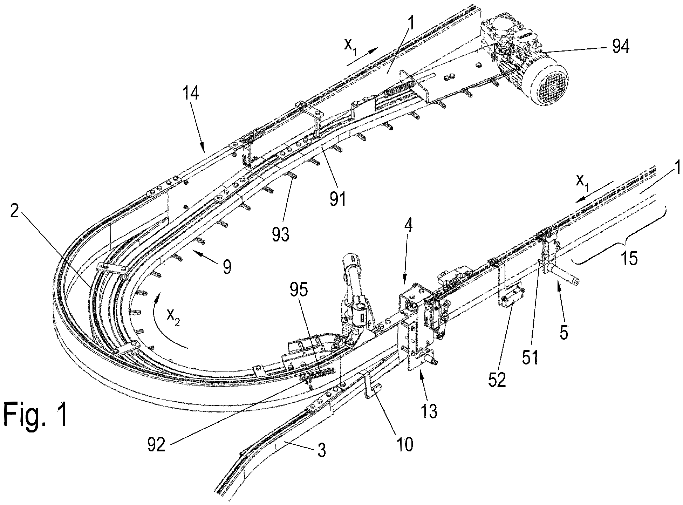

In der Figur 1 ist mit dem Bezugszeichen 1 ein erstes Schienenprofil einer Fördervorrichtung zur Beförderung von hängenden Gegenständen bezeichnet. In diesem ersten Schienenprofil 1 ist in einer ersten oberen Laufbahn 11 eine Förderkette 7 geführt. Die Förderkette 7 ist dabei als sogenannte Power-and-Free-Kette ausgebildet, mit einem unterhalb eines Basiskörpers 62 eines jeweiligen Kettengliedes vertikal elastisch angeordneten Schubkörpers 63, der mindestens eine Ausnehmung zur formschlüssigen Aufnahme eines Koppelstücks eines Kopfteils 61 eines Halteadapters 6 aufweist. Der Basiskörper ist dabei mit seitlichen Reibrollandrückflächen versehen, an die (nicht dargestellte) Reibrollen zum Antrieb der Förderkette 7 andrückbar sind, um die Förderkette 7 in eine Förderrichtung x₁ im Schienenprofil 1 zu bewegen. Der Aufbau einer solchen Förderkette 7 ist in der deutschen Patentanmeldung DE 10 2013 100 132 beschrieben, auf die hier Bezug genommen wird.

Die zu befördernden hängenden Gegenstände werden dabei beispielsweise mithilfe eines Bügels, der in einen Halteadapter 6 eingehängt ist, befördert. Die Halteadapter 6 weisen dabei ein in einer zweiten Laufbahn 12 des ersten Schienenprofils 1 rollbargelagerten Kopfteil 61 auf, wobei das Kopfteil 61 so geformt ist, dass es, wie oben beschrieben bei sich bewegender Förderkette 7 von dieser koppelbar und entkoppelbar ist.

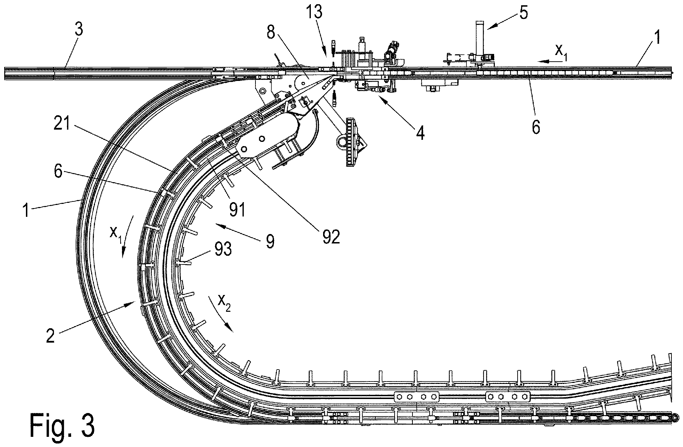

Um einzelne an einem bestimmten Halteadapter 6 angehängter Gegenstände aus dem ersten Schienenprofil 1 auszusortieren, weist das erste Schienenprofil 1 einen Sortierabschnitt 13 mit einer Vereinzelungseinrichtung 4 und eine in Förderrichtung x₁ nachfolgenden Weiche 8 auf, wie in der in Figur 3 gezeigten Ansicht von unten auf das erste Schienenprofil 1 gezeigt ist.

Bevorzugt ist vor dem Sortierabschnitt 13 des ersten Schienenprofils 1 eine Stoppeinrichtung 5 am ersten Schienenprofil 1 vorgesehen, um unmittelbar hinter dem Sortierabschnitt 13 nur eine vorbestimmte Anzahl von Halteadaptern 6 einzulassen.

Als "hinter" dem Sortierabschnitt 13 ist dabei ein Abschnitt zu verstehen, der von einem Adapter 6 in Förderrichtung x₁ durchlaufen wird, bevor er den Sortierabschnitt 13 erreicht. Entsprechend ist unter "vor" dem Sortierabschnitt 13 dabei ein Abschnitt zu verstehen, der von einem Adapter 6 in Förderrichtung x₁ durchlaufen wird, nachdem der den Sortierabschnitt 13 passiert hat.

Die Stoppeinrichtung 5 weist dabei im Wesentlichen einen elektrisch ansteuerbaren Sperrsteg 51 auf, der von einer Erkennungseinrichtung 52, beispielsweise ein Lichtschranke, gesteuert wird, wobei die Erkennungseinrichtung 52 feststellt, ob an einer vorbestimmten Position hinter der Erkennungseinrichtung 52 ein Halteadapter 6 vorhanden ist oder nicht. Wird ein Halteadapter erkannt, gibt die Erkennungseinrichtung 52 ein Signal an die Stoppeinrichtung 5 aus, durch das der Sperrsteg 51 der Stoppeinrichtung 5 in den Laufweg der Halteadapter 6 bewegt wird und so die Weiterbewegung der in Förderrichtung X1 vor der Stoppeinrichtung 5 herankommenden Halteadapter 6 blockiert.

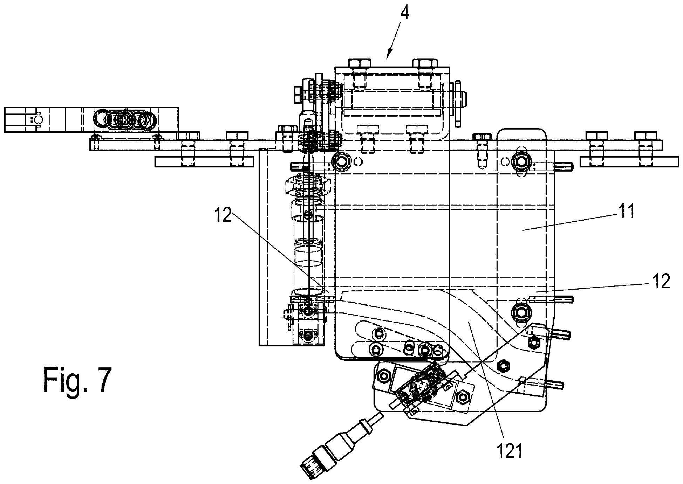

Die zweite Laufbahn 12 ist im Bereich des Sortierabschnittes 13 als Gefällestrecke 121, gezeigt in Figur 7, in Förderrichtung X1 ausgebildet, bei der der Abstand D zwischen der ersten Laufbahn 11 und der zweiten Laufbahn 12 sich auf ein Maß vergrößert, bei dem die Halteadapter 6 und die Förderkette 7 voneinander entkoppelt sind.

Bedingt durch die Gefällestrecke 121 bewegen sich so die Halteadapter 6 von der Förderkette 7 entkoppelt weiter in Förderrichtung x₁. Anschließend laufen die Halteadapter 6 durch eine Leseeinrichtung, die Daten eines an dem Halteadapter 6 vorgesehenen Datenspeichers, beispielsweise eines RFID-Chips oder dergleichen, ausliest. Dadurch ist erkennbar, ob die vor der Leseeinrichtung vorgesehene Weiche 8 den Halteadapter 6 aus dem Schienenprofil 1 heraus in ein Schienenprofil 3 leitet, über das der Halteadapter 6 und der daran hängende Gegenstand in eine weitere Fördervorrichtung weitergeleitet wird. Dieses dritte Schienenprofil 3 ist dabei bevorzugt als Gefällestrecke ausgeführt, so dass der Adapter mit dem daran hängenden Gegenstand schwerkraftbedingt entlang des dritten Schienenprofils 3 weiterbefördert wird.

Soll der ausgelesene Halteadapter 6 nicht aus dem ersten Schienenprofil 1 aussortiert werden, schaltet die Weiche um und überführt den Halteadapter 6 in ein zweites Schienenprofil 2, das mit einer Laufbahn 21 zur Aufnahme und Weiterförderung des Halteadapters 6 an die zweite Laufbahn 12 des ersten Schienenprofils 1 anschließt und in einem Wiedereingliederungsabschnitt 14 des ersten Schienenprofils 1 mündet.

Unmittelbar nach der Weiche 8 ist an beiden Schienenprofilen 2, 3 jeweils eine weitere Erkennungseinrichtung 10, beispielsweise eine Lichtschranke, angeordnet, die die Vereinzelungseinrichtung 4 derart steuert, dass bei Erkennen eines die Erkennungseinrichtung 10 passierenden Adapters 6 der nächste von der Vereinzelungseinrichtung 4 angehaltene Adapter 6 freigegeben wird und in der Gefällestrecke 121 sich auf die Weiche 8 zu bewegt.

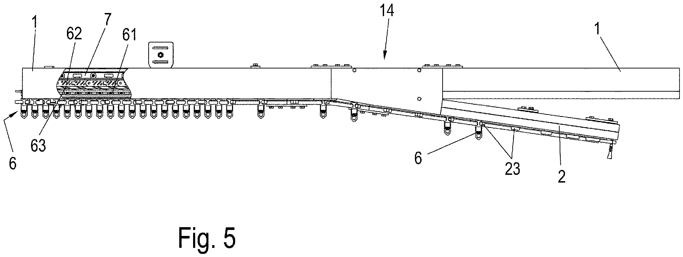

Die zweite Laufbahn 12 des ersten Schienenprofils 1 ist im Bereich diese Wiedereingliederungsabschnitts 14 bevorzugt als Steigungsstrecke 122 in Förderrichtung X1 ausgebildet, wie es in Figur 5 zu erkennen ist.

In dem Wiedereingliederungsabschnitt 14 verkleinert sich dabei der Abstand D zwischen der ersten Laufbahn 11 und der zweiten Laufbahn 12 des ersten Schienenprofils 1 von einem Maß, bei dem die Halteadapter 6 und die Förderkette 7 nicht miteinander koppelbar sind, auf ein Maß, bei dem die Halteadapter 6 und die Förderkette miteinander koppelbar sind, so dass die Halteadapter 6 nach Durchlaufen der Steigungsstrecke 122 wieder von der Förderkette 7 aufgenommen bzw. angekoppelt werden und so im ersten Schienenprofil 1 weiterbefördert werden.

Ebenso sind andere Ausbildungen des Wiedereingliederungsabschnitt 14 denkbar, beispielsweise in Gestalt einer horizontal ausgerichteten zweiten Laufbahn 12 des ersten Schienenprofils 1, wobei die die Förderkette 7 aufnehmende erste Laufbahn 11 als Gefällestrecke ausgebildet ist oder auch in Gestalt einer seitlichen Heranführung.

Das erste Schienenprofil 1 ist dabei vorzugsweise als umlaufendes Schienenprofil 1 ausgebildet, so dass die im Wiedereingliederungsabschnitt 14 wieder in die zweite Laufbahn 12 eingegliederten Halteadapter 6 schließlich wieder vor dem Sortierabschnitt 13 des ersten Schienenprofils ankommen.

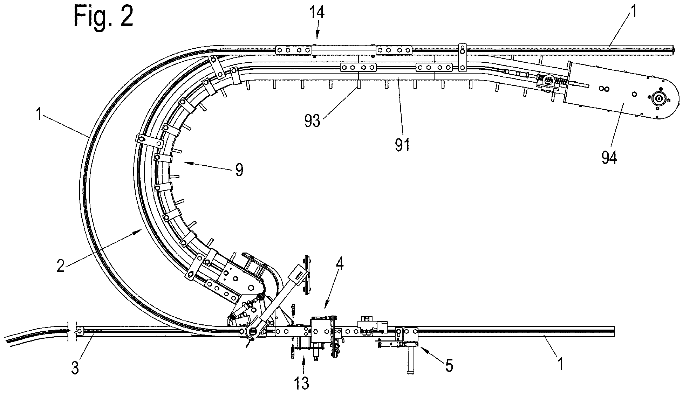

Um die Halteadapter 6 zwischen den Sortierabschnitt 13 und dem Wiedereingliederungsabschnitt 14 weiter zu befördern, ist parallel zu dem zweiten Schienenprofil 2 eine Fördereinrichtung 9 zur Weiterbeförderung der Halteadapter 6 in Förderrichtung x₂, parallel zur Förderrichtung x₁ der zweiten Laufbahn 12 vorgesehen. Diese Fördereinrichtung 9, beispielsweise gezeigt in den Figuren 1 bis 3, weist dabei vorzugsweise als Kettenantrieb mit in den Kopfteil 61 der Halteadapter 6 eingreifenden Fingern 93 zur Weiterbeförderung der Halteadapter 6 in Förderrichtung x₂ ausgebildet. Diese Finger 93 sind dabei an Haltestücken 92 befestigt, die unterhalb der Kette 95 der Fördereinrichtung 9 festgelegt sind.

Die Finger 93 stehen dabei, wie in den Figuren 1 bis 3 erkennbar, senkrecht zur Förderrichtung x₂ in Richtung des zweiten Schienenprofils 2 hervor und hintergreifen zur Beförderung die Halteadapter 6 und schieben diese in Förderrichtung x₁ in Richtung des Wiedereingliederungsabschnitts 14 des ersten Schienenprofils 1.

Besonders bevorzugt sind die Finger 93 elastisch ausgebildet. Dadurch wird gewährleistet, dass selbst bei zufälligem Zusammenstoßen eines Fingers 93 mit einem Halteadapter 6, bei dem sich parallel zur Förderrichtung stehende Flächen des Halteadapters 6 und des Fingers 93 berühren, der Finger 93 elastisch verbogen werden kann und so entweder vor oder hinter den Halteadapter 6 ausweichen kann und dadurch bei Ausweichen in Förderrichtung hinter dem Halteadapter 6 diesen weiterbefördert oder bei Ausweichen vor den Halteadapter der nächste Finger 93 den Halteadapter 6 weiter zum Wiedereingliederungsabschnitt 14 befördert.

Wie in Figur 1 außerdem gezeigt, ist nach einer weiteren bevorzugten Ausführungsvariante in Förderrichtung x₁ vor der Stoppeinrichtung 5 ein Geschwindigkeitssteuerabschnitt 15 vorgesehen, der mit einer weiteren (hier nicht gezeigten) Erkennungseinrichtung zur Erkennung einer Anzahl von in dem Geschwindigkeitssteuerabschnitt 15 vorhandenen Adapter 6 ausgestattet ist. Damit ist eine kapazitätsgesteuerte Geschwindigkeitsregelung der Fördervorrichtung ermöglicht.

So wird bei Feststellung einer Unterschreitung einer vorgegebenen Anzahl an Adaptern 6 in dem Geschwindigkeitssteuerabschnitt 15 von der Erkennungseinrichtung ein Steuersignal zur Erhöhung der Fördergeschwindigkeit der Förderkette 7 an eine Antriebseinheit der Förderkette 7 ausgegeben. Damit können Bereiche der Fördervorrichtung, die mit nur wenigen Adaptern 6 bestückt sind, in kürzerer Zeit durchlaufen werden und somit die Adapter 6 schneller dem Sortierabschnitt 13 zugeführt und damit die Aussortierung gewünschter Gegenstände aus der Fördervorrichtung weiter verkürzt werden.

Entsprechend ist es nach einer Ausführungsvariante vorgesehen, bei Überschreitung einer vorgegebenen Anzahl an Adaptern 6 ein Steuersignal zur Absenkung der Fördergeschwindigkeit der Förderkette 7 an die Antriebseinheit der Förderkette 7 auszugeben. Ein solche Überschreitung der vorgegebene Anzahl kann beispielsweise vorkommen, wenn in einem anderen Bereich der Fördervorrichtung eine große Anzahl an Adaptern und daran angehängte Gegenstände eingebracht und/oder aufgestaut werden und dann dicht an dicht weiterbefördert werden.

Durch das Herunterfahren bzw. Hochfahren der Förderkettengeschwindigkeit wird außerdem eine gleichmäßigere Verteilung der zu befördernden Gegenstände auf der Fördervorrichtung erreicht. Dadurch wir außerdem bewirkt, dass der Staudruck der Adapter 6 hinter dem Sortierabschnitt 13 aufgrund der nahezu konstant gehaltenen Anzahl der Adapter 6 etwa gleich bleibt.

Das Herunterfahren bzw. Hochfahren der Förderkettengeschwindigkeit sorgt außerdem dafür, dass aufgrund der gleichbleibenden Fördergeschwindigkeit der zweiten Fördereinrichtung 9 der mittlere Abstand der Adapter 6 voneinander entsprechend kleiner oder größer wird und dadurch eine optimale Ausnutzung des Förderers erreichbar ist. So werden bei gedrosselter Geschwindigkeit der Förderkette 7 im Wiedereingliederungsabschnitt 14 die Adapter 6 dichter zusammengedrängt und entsprechend bei erhöhter Geschwindigkeit der Förderkette 7 im Wiedereingliederungsabschnitt 14 die Adapter 6 weiter voneinander beabstandet in die zweite Laufbahn 12 eingegliedert.

### Bezugszeichenliste

- 1: erstes Schienenprofil
- 11: erste Laufbahn
- 12: zweite Laufbahn
- 121: Gefällestrecke
- 122: Steigungsstrecke
- 13: Sortierabschnitt
- 14: Wiedereingliederungsabschnitt
- 15: Geschwindigkeitssteuerabschnitt

- 2: zweites Schienenprofil
- 21: Laufbahn

- 3: drittes Schienenprofil

- 4: Vereinzelungseinrichtung

- 5: Stoppeinrichtung
- 51: Sperrsteg
- 52: Zähleinrichtung

- 6: Halteadapter
- 61: Kopfteil
- 62: Basiskörper
- 63: Schubkörper

- 7: Förderkette

- 8: Weiche

- 9: Fördereinrichtung
- 91: Laufbahn
- 92: Haltestücke
- 93: Finger
- 94: Antrieb
- 95: Kette

- 10: Erkennungseinrichtung

- D: Abstand
- x₁: Förderrichtung
- x₂: Förderrichtung

## Patentansprüche

1. Fördervorrichtung zur Beförderung von hängenden Gegenständen, aufweisend
- ein erstes Schienenprofil (1) mit einer ersten, oberen Laufbahn (11) und einer unterhalb der ersten Laufbahn (11) angeordneten zweiten Laufbahn (12),
- eine Förderkette (7), die in der ersten Laufbahn (11) des Schienenprofils (1) in einer Förderrichtung (X₁) kontinuierlich bewegbar ist,
- Halteadapter (6) zur Halterung von zu befördernden Gegenständen, mit jeweils einem in der zweiten Laufbahn (12) des Schienenprofils (1) rollbar gelagerten Kopfteil (61), wobei die Halteadapter (6) bei sich bewegender Förderkette (7) von dieser koppel- und entkoppelbar sind,
**dadurch gekennzeichnet, dass**
- das erste Schienenprofil (1) einen Sortierabschnitt (13) mit einer Vereinzelungseinrichtung (4) und einer in Förderrichtung (x) nachfolgenden Weiche (8) aufweist,
- wobei die zweite Laufbahn (12) im Bereich des Sortierabschnittes (13) als Gefällestrecke (121) in Förderrichtung (x₁) ausgebildet ist, bei der der Abstand (d) zwischen der ersten Laufbahn (11) und der zweiten Laufbahn (12) sich auf ein Maß vergrößert, bei dem die Halteadapter (6) und die Förderkette (7) voneinander entkoppelt sind,
- wobei die Vereinzelungseinrichtung (4) und die Weiche (8) in einem Bereich des Sortierabschnitts (13) angeordnet sind, bei dem die Halteadapter (6) von der Förderkette (7) entkoppelt sind.

2. Fördervorrichtung nach Anspruch 1, **dadurch gekennzeichnet, dass** das erste Schienenprofil (1) als geschlossenes Kreislaufprofil ausgebildet ist, wobei in Förderrichtung (x₁) vor der Weiche (8) ein zweites Schienenprofil (2) sowie ein drittes Schienenprofil (3) anschließt, wobei das zweite Schienenprofil (2) mit einer Laufbahn (21) zur Aufnahme und Weiterförderung der Halteadapter (6) an die zweite Laufbahn (12) des ersten Schienenprofils (1) anschließt und in einen Wiedereingliederungsabschnitt (14) des ersten Schienenprofils (1) mündet und wobei das dritte Schienenprofil (3) an die zweite Laufbahn (12) des ersten Schienenprofils (1) zur Weiterbeförderung der Halteadapter (6) zu einer weiteren Fördervorrichtung anschließt.

3. Fördervorrichtung nach Anspruch 2, **dadurch gekennzeichnet, dass** vor der Weiche (8) eine Erkennungseinrichtung (10) am zweiten Schienenprofil (2) sowie am dritten Schienenprofil (3) vorgesehen ist, mit der die Vereinzelungseinrichtung (4) steuerbar ist.

4. Fördervorrichtung nach einem der vorstehenden Ansprüche, **dadurch gekennzeichnet, dass** vor dem Sortierabschnitt (13) des ersten Schienenprofils (1) eine Stoppeinrichtung (5) am ersten Schienenprofil (1) vorgesehen ist.

5. Fördervorrichtung nach einem der vorstehenden Ansprüche, **dadurch gekennzeichnet, dass** die zweite Laufbahn (12) im Bereich des Wiedereingliederungsabschnitts (14) als Steigungsstrecke (122) in Förderrichtung (x) ausgebildet ist, wobei in dem Wiedereingliederungsabschnitt (14) der Abstand (d) zwischen der ersten Laufbahn (11) und der zweiten Laufbahn (12) sich von einem Maß, bei dem die Halteadapter (6) und die Förderkette (7) nicht miteinander koppelbar sind, auf ein Maß verkleinert, bei dem die Halteadapter (6) und die Förderkette (7) miteinander koppelbar sind.

6. Fördervorrichtung nach Anspruch 5, **dadurch gekennzeichnet, dass** parallel zu dem zweiten Schienenprofil (2) eine Fördereinrichtung (9) zur Weiterbeförderung der Halteadapter (6) in Förderrichtung (x₂) vorgesehen ist.

7. Fördervorrichtung nach Anspruch 6, **dadurch gekennzeichnet, dass** die Fördereinrichtung (9) als Kettenantrieb mit in den Kopfteil (61) der Halteadapter (6) eingreifenden Fingern (93) zur Weiterbeförderung der Halteadapter (6) in Förderrichtung (x₂) ausgebildet ist.

8. Fördervorrichtung nach Anspruch 7, **dadurch gekennzeichnet, dass** die Finger (93) elastisch ausgebildet sind.

9. Fördervorrichtung nach einem der vorstehenden Ansprüche, **dadurch gekennzeichnet, dass** in Förderrichtung (x₁) vor der Stoppeinrichtung (5) ein Geschwindigkeitssteuerabschnitt (15) vorgesehen ist, mit einer Erkennungseinrichtung zur Erkennung einer Anzahl von in dem Geschwindigkeitssteuerabschnitt (15) vorhandenen Adaptern (6), wobei bei Unterschreitung einer vorgegebenen Anzahl an Adaptern (6) von der Erkennungseinrichtung ein Steuersignal zur Erhöhung der Fördergeschwindigkeit der Förderkette (7) an eine Antriebseinheit der Förderkette (7) ausgegeben wird.

10. Fördervorrichtung nach Anspruch 9, **dadurch gekennzeichnet, dass** bei Überschreitung einer vorgegebenen Anzahl an Adaptern (6) ein Steuersignal zur Absenkung der Fördergeschwindigkeit der Förderkette (7) an eine Antriebseinheit der Förderkette (7) ausgegeben wird.

## Claims

1. Conveyor for conveying hanging objects, comprising
- a first rail profile (1) with a first, upper track (11) and a second track (12) arranged below the first track (11),
- a conveyor chain (7) which can be continuously moved in the first track (11) of the rail profile (1) in a conveying direction (x1),
- holding adapters (6) for holding objects to be conveyed, each having a head part which is rollably supported in the second track (12) of the rail profile (1), wherein the holding adapters (6) can be coupled and decoupled from the conveyor chain (7) while the conveyor chain are moving,
**characterized in that**
- the first rail profile (1) has a sorting section (13) with a separation unit (4) and a switch (8) which follows in conveying direction (x),
- wherein the second track (12) in the region of the sorting section (13) is configured as downward slope (121) in conveying direction (x₁), in which the distance (d) between the first track (11) and the second track (12) increases to a dimension at which the holding adapters (6) and the conveyor chain (7) are decoupled from each other,
- wherein the separation unit (4) and the switch (8) are arranged in a region of the sorting section (13) at which the holding adapters (6) are decoupled from the conveyor chain (7).

2. Conveyor according to claim 1, **characterized in that** the first rail profile (1) is configured as closed circuit profile, wherein in conveying direction (x₁) before the switch (8) a second rail profile (2) and a third rail profile (3) adjoins wherein the second rail profile (2) adjoins the second track (12) of the first rail profile (1) with a track (21) for receiving and further conveying of the holding adapters (6) and leads into a reintegration section (14) of the first rail profile (1) and wherein the third rail profile (3) adjoins the second track (12) of the first rail profile (1) for further conveying the holding adapters (6) to a further conveyor (9).

3. Conveyor according to claim 2, **characterized in that** before the switch (8) an detection device (10) is provided on the second rail profile (2) and on the third rail profile (3), with which the separation unit (4) is controllable.

4. Conveyor according to one of the preceding claims, **characterized in that** before the sorting section (13) of the first rail profile (1) a stopping device (5) is provided on the first rail profile (1).

5. Conveyor according to one of the preceding claims, **characterized in that** the second track (12) in the region of the reintegration section (14) is configured as incline (122) in conveying direction (x), wherein in the reintegration section (14) the distance (d) between the first track (11) and the second track (12) decreases from a degree at which the holding adapters (6) and the conveyor chain (7) cannot be coupled with each other, to a degree at which the holding adapters (6) and the conveyor chain (7) can be coupled with each other.

6. Conveyor according to claim 5, **characterized in that** parallel to the second rail profile (2) a conveyor device (x₂) for further conveying the holding adapters (6) is provided.

7. Conveyor according to claim 6, **characterized in that** the conveyor (9) is configured as chain drive with fingers (93) which engage in the head part (61) of the holding adapters (6) for further conveying the holding adapters (6) in conveying direction (x₂).

8. Conveyor according to claim 7, **characterized in that** the fingers (93) are configured elastic.

9. Conveyor according to one of the preceding claims **characterized in that** in conveying direction (x₁) before the stopping device (5) a speed control section (15) is provided, with an detection device fro identifying a number of adapters (6) present in the speed control section (15), wherein in case of less than a predetermined number of adapters (6) the detection device outputs a control signal to a drive unit of the conveyor chain (7) for increasing the conveying speed of the conveyor chain (7).

10. Conveyor according to claim 9, **characterized in that** when exceeding a predetermined number of adapters (6) a control signal for lowering the conveying speed of the conveyor chain (7) is outputted to a drive unit of the conveyor chain (7).

## Revendications

1. Dispositif de transport pour le transport d'objets suspendus, comprenant
- un premier profilé de rail (1) avec une première piste supérieure (11) et une deuxième piste (12) disposée en dessous de la première piste (11),
- une chaîne de transport (7) qui peut se déplacer en continu dans la première piste (11) du profilé de rail (1) dans un sens de transport (x₁),
- des adaptateurs de rétention (6) pour retenir des objets transportés avec une partie de tête (61) supportée avec possibilité de roulement dans la deuxième piste (12) du profilé de rail (1), les adaptateurs de rétention (6) pouvant être couplés à la chaîne de transport (7) et découplés de celle-ci alors qu'elle se déplace,
**caractérisé en ce que**
- le premier profilé de rail (1) présente une section de triage (13) avec un dispositif de séparation (4) suivi dans le sens de transport (x) d'un aiguillage (8),
- la deuxième piste (12) étant conformée au niveau de la section de triage (13) comme un tronçon descendant (121) dans le sens de transport (x₁), dans lequel la distance (d) entre la première piste (11) et la deuxième piste (12) augmente jusqu'à une dimension à laquelle les adaptateurs de rétention (6) sont découplés de la chaîne de transport (7),
- le dispositif de séparation (4) et l'aiguillage (8) étant disposés dans une zone de la section de triage (13) dans laquelle les adaptateur de rétention (6) sont découplés de la chaîne de transport (7).

2. Dispositif de transport selon la revendication 1, **caractérisé en ce que** le premier profilé de rail (1) est conformé comme un profilé de circuit fermé, un deuxième profilé de rail (2) et un troisième profilé de rail (3) se raccordant avant l'aiguillage (8) dans le sens de transport (x₁), le deuxième profilé de rail (2) se raccordant à la deuxième piste (12) du premier profilé de rail (1) avec une piste (21) pour recevoir et continuer à transporter les adaptateurs de rétention (6) et débouchant dans une section de réintégration (14) du premier profilé de rail (1), et le troisième profilé de rail (3) se raccordant à la deuxième piste (12) du premier profilé de rail (1) pour continuer à transporter les adaptateurs de rétention (6) vers un autre dispositif de transport.

3. Dispositif de transport selon la revendication 2, **caractérisé en ce qu'**un dispositif de reconnaissance (10), avec lequel le dispositif de séparation (4) peut être contrôlé, est prévu avant l'aiguillage (8) sur le deuxième profilé de rail (2) et le troisième profilé de rail (3).

4. Dispositif de transport selon l'une des revendications précédentes, **caractérisé en ce qu'**un dispositif de butée (5) est prévu sur le premier profilé de rail (1) avant la section de triage (13) du premier profilé de rail (1).

5. Dispositif de transport selon l'une des revendications précédentes, **caractérisé en ce que** la deuxième piste (12) est formée au niveau de la section de réintégration (14) comme un tronçon ascendant (122) dans le sens de transport (x), la distance (d) entre la première piste (11) et la deuxième piste (12) diminuant dans la section de réintégration (14) d'une dimension à laquelle les adaptateurs de rétention (6) ne peuvent pas être couplés à la chaîne de transport (7) à une dimension à laquelle les adaptateurs de rétention (6) peuvent être couplés à la chaîne de transport (7).

6. Dispositif de transport selon la revendication 5, **caractérisé en ce qu'**il est prévu parallèlement au deuxième profilé de rail (2) un dispositif de transport (9) pour continuer à transporter les adaptateurs de rétention (6) dans le sens de transport (x₂).

7. Dispositif de transport selon la revendication 6, **caractérisé en ce que** le dispositif de transport (9) est conçu comme un entraînement à chaîne avec des pattes (93) qui se mettent en prise dans la partie de tête (61) des adaptateurs de rétention (6) pour continuer à transporter les adaptateurs de rétention (6) dans le sens de transport (x₂).

8. Dispositif de transport selon la revendication 7, **caractérisé en ce que** les pattes (93) sont élastiques.

9. Dispositif de transport selon l'une des revendications précédentes, **caractérisé en ce qu'**il est prévu dans le sens de transport (x₁) avant le dispositif de butée (5) une section de régulation de la vitesse (15) munie d'un dispositif de reconnaissance pour la reconnaissance d'un nombre d'adaptateurs (6) présents dans la section de régulation de la vitesse (15), le dispositif de reconnaissance envoyant à une unité d'entraînement de la chaîne de transport (7), lorsque le nombre d'adaptateurs (6) est inférieur à une valeur de consigne, un signal de commande pour augmenter la vitesse de transport de la chaîne de transport (7).

10. Dispositif de transport selon la revendication 9, **caractérisé en ce que** lorsque le nombre d'adaptateurs (6) dépasse une valeur de consigne, un signal est transmis à une unité d'entraînement de la chaîne de transport (7) pour réduire la vitesse de transport de la chaîne de transport (7).
